# EUROPEAN PATENT SPECIFICATION

(11) **EP 2 575 251 B1**
(45) Date of publication and mention of the grant of the patent: **27.02.2019**
(21) Application number: 12183036.8
(22) Date of filing: 05.09.2012
(51) Int. Cl.: H02P 9/10, H02P 9/30

(54) **Method and arrangement in connection with a cascade-fed asynchronous generator**
Verfahren und Anordnung in Verbindung mit einem in Kaskaden gespeisten Asynchrongenerator
Procédé et dispositif en connexion avec un générateur asynchrone alimenté en cascade

(30) Priority: 23.09.2011 FI 20115935
(43) Date of publication of application: 03.04.2013
(73) Proprietor: ABB Schweiz AG, 5400 Baden (CH)
(72) Inventor: Virtanen, Reijo Kalevi, 00380 Helsinki (FI)
(74) Representative: Kolster Oy Ab

(56) References cited:
- US-A1- 2007 052 244
- US-A1- 2010 219 634

## Description

### Field of the invention

The invention relates to cascade-fed asynchronous generators and particularly to controlling such generators in connection with disturbances in networks.

### Background of the invention

A cascade-fed or double-fed asynchronous generator is generally used as a generator for wind power plants to generate electric energy. In cascade-fed asynchronous generator operation, the stator of the generator is connected directly to the network to be fed, whereas the rotor of the generator is connected to the network via a frequency converter. The frequency converter, which consists of two controllable bridges and a direct-voltage circuit between them, transmits rotor power from the network to the rotor circuit or from the rotor circuit to the network, depending on the rotation speed of the generator. By means of the frequency converter, the rotor of the generator is excited, depending on the rotation speed, in such a way that the voltage generated in the stator has a desired frequency.

Companies managing electric networks have codes on what kinds of properties generators to be connected to a network should have. These grid codes determine for instance how a wind power plant should operate in connection with network disturbances. One of these codes relates particularly to supporting a network in connection with voltage dips. The voltage in the network to be fed may crash down for instance because of a short circuit or corresponding failure. Several network companies require that a wind power plant not be disconnected from the network because of a voltage dip but that the wind power plant should support the network voltage by feeding reactive power to the failed network.

Feeding reactive power to the network is implemented in connection with cascade-fed asynchronous generators by controlling the currents of the rotor of the asynchronous generator with a frequency converter in such a way that the excitation of the generator changes, and reactive power is fed to the network via the stator of the generator.

As the grid codes are tightened, it becomes more and more important for the reactive network support to be raised to the set level as fast as possible and for the achieved level to be stable. Since a cascade generator is a rotating machine, it is difficult to control it accurately in connection with network disturbances. Presently, desired current can be fed to a network by a frequency converter, and particularly by its network bridge (ISU). In connection with cascade-controlled asynchronous generators, the frequency converter is dimensioned on the basis of the rotor power, which is about 1/3 of the whole operating power. Thus, rated network support cannot be generated by a frequency converter alone.

Document US 2007/0052244 A1 discloses a control system for a doubly fed induction machine. In the control system reference values for reactive current are calculated during a voltage dip.

### Brief description of the invention

It is thus an object of the invention to provide a method and an apparatus implementing the method in such a manner that the above-mentioned problem can be solved. The object of the invention is achieved by a method and an apparatus that are characterized by what is stated in the independent claims. Preferred embodiments of the invention are disclosed in the dependent claims.

The invention is based on the idea that when reactive current is fed via the stator of cascade drive, a frequency converter in the rotor circuit of the cascade drive is controlled to generate part of the reactive current. In particular, the network converter of the frequency converter is used for generating that part of the reactive current which the stator circuit cannot, due to dynamic changes, generate in the network.

An advantage of the method and apparatus according to the invention is that the performance of the network support of the cascade drive can be essentially improved, compared with prior art, without any changes in the dimensioning of the apparatus.

### Brief description of the figures

The invention is now described in closer detail in connection with preferred embodiments and with reference to the accompanying drawings, in which
Figure 1 shows a principled block diagram of an apparatus implementing a method according to the invention, and
Figure 2 shows simulation results of network support.

### Detailed description of the invention

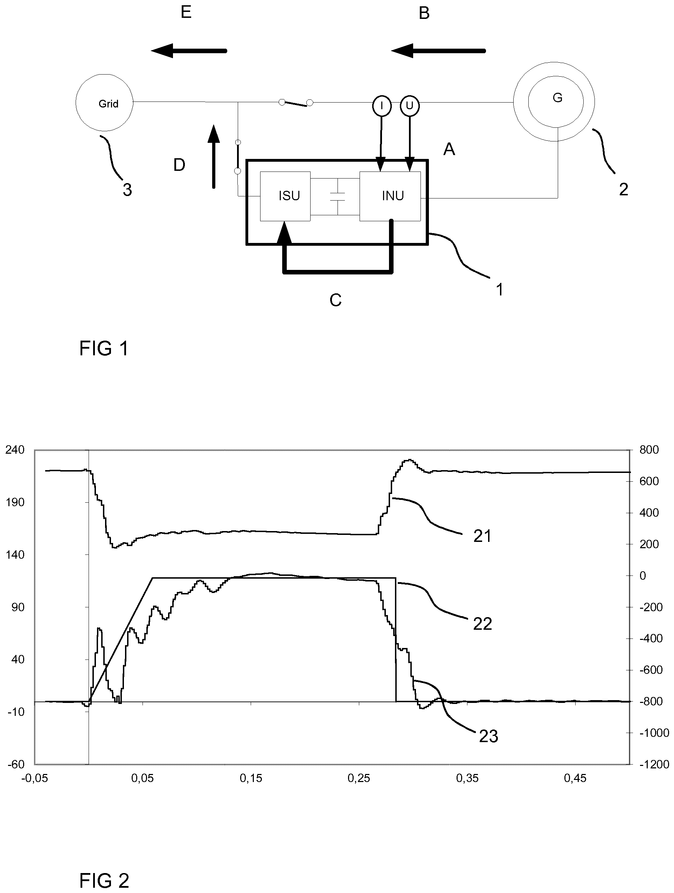

In order to control a cascade-fed generator, a frequency converter is used in a known manner, and it is connected between the rotor of the generator and the network to be fed. The frequency converter comprises, in a known manner, two inverters (ISU, INU) and a direct voltage intermediate circuit between them. Figure 1 shows a principled view of cascade drive. The inverter (ISU) of the frequency converter 1 on the side of the network is also called a network bridge or network converter, whereas the inverter (INU) on the side of the generator is called a load bridge.

During the operation of a cascade-fed generator 2, the inverter (INU) on the side of the generator obtains measurement data on the voltage of a network 3 and the current of the stator. When a dip in the network voltage resulting from failure in the network is observed, the inverter (INU) on the side of the generator excites the rotor of the generator in such a way that the generator begins to feed reactive current to the network to support the voltage in the network.

From the measured voltage in the network and the stator current, the reactive current in the network, i.e. the current which is generated by the generator to support the voltage in the network, is determined in accordance with the invention.

The reactive current of the network is preferably determined in such a way that the positive sequence of the voltage of the network is calculated from the measured voltage in the network, and correspondingly, the positive sequence of the stator current is calculated from the measured stator current. From the calculated positive sequences, the reactive current of the network is calculated.

Reactive current by means of positive sequences may be determined for instance in the manner described in publication Jouko Niiranen, "About the Active and Reactive Power Measurements in Unsymmetrical Voltage Dip Ride-through Testing", WIND ENERGY, 2008 11: 121-131. This publication also discloses other ways to determine reactive current. Determining reactive current is thus known as such.

On the basis of the measured voltage in the network, an instruction in reactive current, which is determined on the basis of the network requirements, is calculated. When the magnitude of the reactive current generated by the generator is subtracted from the instruction in reactive current, a difference value between the realized reactive compensation and this instruction is obtained. This difference value is fed, in accordance with the idea of the invention, to the network converter (ISU) of the frequency converter 1 to serve as an instruction in generating reactive current.

In a case of a network disturbance, voltages and currents are measured nearly continuously, so the instruction in generating reactive current, obtained by the network converter, is frequently updated. Since network converters have quick control properties, reacting to the instructions in reactive current also takes places quickly.

Reactive current may be fed by the network converter until the current limits of the network converter restrict compensation. It is to be noted that the network converter is simultaneously also used for other functions relating to generation of reactive current via generators.

In Figure 1, the method of the invention is further illustrated by indicating functions with arrow symbols. In simple terms, the method comprises measuring (A) the voltage in the network and the current in the stator. When the voltage in the network is reduced, reactive current (B) is fed via the stator of the generator. After the magnitude of the reactive current fed by the generator has been determined, the difference between the instruction in reactive current and the determined reactive current is fed (C) to the ISU of the inverter to serve as an instruction in reactive current. ISU feeds (D) reactive current to the network, and total compensation (E) is formed of the reactive current (B) to be fed via the stator and the reactive current (D) fed by the ISU.

Figure 2 shows simulation results of applying the method according to the invention. Figure 2 shows a symmetric drop in a voltage 21 in the network, and a base value 22 of the reactive current required during it. Curve 23 shows reactive support provided by the stator. Here, it can be seen how compensation 23 implemented by the stator cannot completely comply with the base value 22. This difference between the compensation implemented by the stator and the compensation instruction is the difference value which is fed to the network converter.

When the idea of the invention is put into practice, the reactive current generated by the frequency converter makes the compensation provided by cascade drive more efficient and more accurate. Compensation provided by a generator is dynamically inaccurate, and reactive current feed based on an error variable provided by a network converter (ISU) corrects, owing to its speed, this inaccuracy.

The method of the invention can be implemented by a frequency converter provided with the required measurements of voltages and currents as well as the required control means. In the control units of the frequency converter, there is significant computing capacity allowing implementation of the required calculations and control circuits. The required calculations may also be performed in a processor external to the frequency converter.

It will be apparent to a person skilled in the art that as technology advances, the basic idea of the invention may be implemented in many different ways. The invention and its embodiments are thus not restricted to the examples described above but may vary within the scope of the claims.

## Claims

1. A method for controlling a cascade-fed asynchronous generator in connection with a voltage dip of a network fed by the generator, wherein a frequency converter is connected between the rotor of the asynchronous generator and the network, wherein the frequency converter consists of two controllable bridges: a network bridge (ISU) and a load bridge (INU), the method comprising
measuring the magnitude of the voltage in the network;
calculating, on the basis of the voltage in the network, a base value for reactive current to be fed to the network;
generating reactive current in the network by the generator by exciting the rotor with the load bridge (INU);
measuring the stator current;
determining the actual value of the reactive current in the network;
calculating the difference between the base value and the actual value of the reactive current;
**characterized by** giving the calculated difference to the network bridge (ISU) of the frequency converter to serve as an instruction in reactive current; and
generating reactive current in the network by the network bridge (ISU) of the frequency converter in accordance with the instruction in reactive current.

2. A method according to claim 1, **characterized by** measuring the magnitude of the voltage in the network and the stator current by a load bridge (INU) of the frequency converter.

3. A method according claim 1 or 2, **characterized by** generating reactive current in the network by the generator comprising the step of
exciting the generator by the load bridge of the frequency converter in such a way that the generator generates reactive current.

4. A method according to claim 1, 2 or 3, **characterized by** determining the actual value of the reactive current comprising the steps of
calculating the positive sequence of the voltage in the network and the positive sequence of the current of the stator; and
calculating from the positive sequences the actual value of the reactive current in the network.

5. An apparatus for controlling a cascade-fed asynchronous generator in connection with a voltage dip of a network fed by the generator, wherein a frequency converter is connected between the rotor of the asynchronous generator and the network, wherein the frequency converter consists of two controllable bridges: a network bridge (ISU) and a load bridge (INU), the apparatus comprises
means for measuring the voltage in the network;
means for calculating a base value for reactive current to be fed to the network on the basis of the voltage;
means for controlling the generator to generate reactive current in the network by exciting the rotor with the load bridge (INU);
means for measuring the stator current;
means for determining the actual value of the reactive current in the network;
means for calculating the difference between the base value and the actual value of the reactive current; **characterized by**
means for giving the calculated difference to the network bridge (ISU) of the frequency converter to serve as an instruction in reactive current, whereby the network bridge (ISU) of the frequency converter is arranged to generate reactive current in the network in accordance with the instruction in reactive current.

## Patentansprüche

1. Verfahren zum Steuern eines in Kaskaden gespeisten Asynchrongenerators in Verbindung mit einem Spannungseinbruch eines durch den Generator gespeisten Netzwerks, wobei ein Frequenzwandler zwischen dem Rotor des Asynchrongenerators und dem Netzwerk geschaltet ist, wobei der Frequenzwandler aus zwei steuerbaren Brücken besteht: einer Netzwerkbrücke (ISU) und einer Lastbrücke (INU), wobei das Verfahren umfasst:
Messen der Größe der Spannung in dem Netzwerk;
Berechnen auf der Basis der Spannung in dem Netzwerk eines Basiswertes für in das Netzwerk zu speisendem Blindstrom;
Erzeugen des Blindstroms in dem Netzwerk durch den Generator durch Erregen des Rotors mit der Lastbrücke (INU);
Messen des Statorstroms;
Bestimmen des tatsächlichen Wertes des Blindstroms in dem Netzwerk;
Berechnen der Differenz zwischen dem Basiswert und dem tatsächlichen Wert des Blindstroms;
**gekennzeichnet durch** Eingeben der berechneten Differenz in die Netzwerkbrücke (ISU) des Frequenzwandlers, um als eine Anweisung im Blindstrom zu dienen; und
Erzeugen von Blindstrom in dem Netzwerk durch die Netzwerkbrücke (ISU) des Frequenzwandlers entsprechend der Anweisung im Blindstrom.

2. Verfahren nach Anspruch 1, **gekennzeichnet durch** Messen der Größe der Spannung im Netzwerk und des Statorstroms durch eine Lastbrücke (INU) des Frequenzwandlers.

3. Verfahren nach Anspruch 1 oder 2, **gekennzeichnet durch** Erzeugen von Blindstrom im Netzwerk durch den Generator, umfassend den Schritt zum Erregen des Generators durch die Lastbrücke des Frequenzwandlers in einer derartigen Weise, dass der Generator Blindstrom erzeugt.

4. Verfahren nach Anspruch 1, 2 oder 3, **gekennzeichnet durch** Bestimmen des tatsächlichen Wertes des Blindstroms, umfassend die Schritte zum Berechnen der positiven Sequenz der Spannung im Netzwerk und der positiven Sequenz des Stroms des Stators, und
Berechnen anhand der positiven Sequenzen des tatsächlichen Wertes des Blindstroms im Netzwerk.

5. Vorrichtung zum Steuern eines in Kaskaden gespeisten Asynchrongenerators in Verbindung mit einem Spannungseinbruch eines durch den Generator gespeisten Netzwerks, wobei ein Frequenzwandler zwischen dem Rotor des Asynchrongenerators und dem Netzwerk geschaltet ist, wobei der Frequenzwandler aus zwei steuerbaren Brücken besteht: einer Netzwerkbrücke (ISU) und einer Lastbrücke (INU), wobei die Vorrichtung umfasst:
eine Einrichtung zum Messen der Spannung in dem Netzwerk;
eine Einrichtung zum Berechnen eines Basiswertes für in das Netzwerk zu speisendem Blindstrom auf der Basis der Spannung;
eine Einrichtung zum Steuern des Generators, um Blindstrom in dem Netzwerk durch Erregen des Rotors mit der Lastbrücke (INU) zu erzeugen;
eine Einrichtung zum Messen des Statorstroms;
eine Einrichtung zum Bestimmen des tatsächlichen Wertes des Blindstroms in dem Netzwerk;
eine Einrichtung zum Berechnen der Differenz zwischen dem Basiswert und dem tatsächlichen Wert des Blindstroms; **gekennzeichnet durch**
eine Einrichtung zum Eingeben der berechneten Differenz in die Netzwerkbrücke (ISU) des Frequenzwandlers, um als eine Anweisung im Blindstrom zu dienen, wobei dadurch die Netzwerkbrücke (ISU) des Frequenzwandlers angeordnet ist, um Blindstrom im Netzwerk entsprechend der Anweisung im Blindstrom zu erzeugen.

## Revendications

1. Procédé de commande d'un générateur asynchrone alimenté en cascade en lien avec un creux de tension d'un réseau alimenté par le générateur, dans lequel un convertisseur de fréquence est connecté entre le rotor du générateur asynchrone et le réseau, dans lequel le convertisseur de fréquence est composé de deux ponts commandables : un pont de réseau (ISU) et un pont de charge (INU), le procédé comprenant :
la mesure de l'amplitude de la tension du réseau ;
le calcul, sur la base de la tension du réseau, d'une valeur de base pour un courant réactif destiné à alimenter le réseau ;
la génération d'un courant réactif dans le réseau par le générateur par excitation du rotor avec le pont de charge (INU) ;
la mesure du courant de stator ;
la détermination de la valeur instantanée du courant réactif dans le réseau ;
le calcul de la différence entre la valeur de base et la valeur instantanée du courant réactif ;
**caractérisé par** la fourniture de la différence calculée au pont de réseau (ISU) du convertisseur de fréquence pour qu'elle serve d'instruction de courant réactif ; et
la génération d'un courant réactif dans le réseau par le pont de réseau (ISU) du convertisseur de fréquence conformément à l'instruction de courant réactif.

2. Procédé selon la revendication 1, **caractérisé par** la mesure de l'amplitude de la tension du réseau et du courant de stator par un pont de charge (INU) du convertisseur de fréquence.

3. Procédé selon la revendication 1 ou 2, **caractérisé par** la génération d'un courant réactif dans le réseau par le générateur, comprenant l'étape d'excitation du générateur par le pont de charge du convertisseur de fréquence de sorte que le générateur génère un courant réactif.

4. Procédé selon la revendication 1, 2 ou 3, **caractérisé par** la détermination de la valeur instantanée du courant réactif, comprenant ces étapes :
calcul de la séquence positive de la tension du réseau et de la séquence positive du courant du stator ; et
calcul, à partir des séquences positives, de la valeur instantanée du courant réactif dans le réseau.

5. Appareil de commande d'un générateur asynchrone alimenté en cascade en lien avec un creux de tension d'un réseau alimenté par le générateur, dans lequel un convertisseur de fréquence est connecté entre le rotor du générateur asynchrone et le réseau, dans lequel le convertisseur de fréquence est composé de deux ponts commandables : un pont de réseau (ISU) et un pont de charge (INU), l'appareil comprenant :
un moyen pour mesurer la tension du réseau ;
un moyen pour calculer une valeur de base pour un courant réactif destiné à alimenter le réseau sur la base de la tension ;
un moyen pour commander le générateur pour qu'il génère un courant réactif dans le réseau en excitant le rotor avec le pont de charge (INU) ;
un moyen pour mesurer le courant de stator ;
un moyen pour déterminer la valeur instantanée du courant réactif dans le réseau ;
un moyen pour calculer la différence entre la valeur de base et la valeur instantanée du courant réactif ; **caractérisé par**
un moyen pour fournir la différence calculée au pont de réseau (ISU) du convertisseur de fréquence pour qu'elle serve d'instruction de courant réactif, le pont de réseau (ISU) du convertisseur de fréquence étant conçu pour générer un courant réactif dans le réseau conformément à l'instruction de courant réactif.
